# EUROPÄISCHE PATENTANMELDUNG

(11) **EP 4 300 791 A1**
(43) Veröffentlichungstag der Anmeldung: **03.01.2024**
(21) Anmeldenummer: 23180323.0
(22) Anmeldetag: 20.06.2023
(51) Int. Cl.: H02K 11/215, H02K 29/08

(54) **VERFAHREN ZUR MONTAGE EINES MAGNETEN EINES HALL-SENSORS AN EINER ROTORWELLE**

(30) Priorität: 27.06.2022 DE 102022206457
(71) Anmelder: Baumüller Nürnberg GmbH, 90482 Nürnberg (DE)
(72) Erfinder: WOROFKA, Nicolas, 90765 Fürth (DE)
(74) Vertreter: FDST Patentanwälte

(57) **Zusammenfassung**

Die Erfindung betrifft ein Verfahren (32) zur Montage eines Magneten (22) eines Hall-Sensors (20) an einer Rotorwelle (10) einer elektrischen Maschine (6) mittels eines Adapters (24). Dabei wird der Magnet (22) in einer Aufnahme (46) des Adapters (24) derart in einer Axialrichtung (48) eingesetzt wird, dass der Magnet (22) in einer Radialrichtung (50) von dem Adapter (24) zumindest teilweise umfangsseitig umgeben wird. Der Adapter (24) wird in Radialrichtung (50) nach innen derart plastisch verformt wird, dass der Magnet (22) in der Aufnahme (46) gehalten wird. Ferner betrifft die Erfindung einen Stempel (54), die Verwendung eines Stempels (54) sowie eine elektrische Maschine (6).

## Beschreibung

Die Erfindung betrifft ein Verfahren zur Montage eines Magneten eines Hall-Sensors an einer Rotorwelle. Die Rotorwelle ist Bestandteil einer elektrischen Maschine. Ferner betrifft die Erfindung einen Stempel sowie die Verwendung eines Stempels und eine elektrische Maschine.

Elektrische Maschinen werden für eine Vielzahl an unterschiedlichen Aufgaben verwendet. Sofern die elektrische Maschine als ein Elektromotor ausgestaltet ist, wird mittels dieser meist ein Bauteil angetrieben. Hierbei ist die elektrische Maschine beispielsweise ein Bestandteil einer Industrieanlage, und das angetriebene Bauteil ist zum Beispiel ein Aktor, mittels dessen eine Erstellung und/oder Bearbeitung von Werkstücken erfolgt. Es ist jedoch auch möglich einen derartigen Elektromotor zum Antrieb eines Kraftfahrzeugs zu verwenden. In diesem Fall wird ein Rad oder ein mit einem Rad wirkverbundenes Getriebe mittels des Elektromotors angetrieben. Somit ist das Kraftfahrzeug als Elektrofahrzeug ausgebildet. Auf diese Weise ist es möglich, das Kraftfahrzeug zumindest lokal emissionsfrei zu betreiben. Das Kraftfahrzeug ist beispielsweise eine Baumaschine oder eine landwirtschaftliche Maschine. Auch ist es möglich, das Kraftfahrzeug als Pistenraupe oder dergleichen auszugestalten. Jedoch wird auch bei Personenkraftwagen oder sonstigen dem Transport oder der Freizeitbeschäftigung dienenden Fahrzeugen zunehmend mittels eines entsprechenden Elektromotors angetrieben.

Unabhängig von dem jeweiligen Verwendungszweck soll meist das mittels des Elektromotors angetriebene Teil an eine bestimmte Position oder mit einer bestimmten Geschwindigkeit verbracht wird. Infolgedessen ist es erforderlich, die Bestromung des Elektromotors in Abhängigkeit einer Drehzahl des Elektromotors einzustellen und somit zu regeln. Hierfür ist es wiederum erforderlich, dass die Drehzahl einer Rotorwelle des Elektromotors erfasst wird. Hierfür wird üblicherweise ein Sensor verwendet, wie ein Hall-Sensor. Dieser weist einen an der Rotorwelle des Rotors befestigten Magneten auf, mittels dessen bei Rotation der Rotorwelle ein zeitlich veränderliches Magnetfeld erzeugt wird. Dieses wird mittels eines des eigentlichen Sensors des Hall-Sensors erfasst, wofür der Hall-Effekt genutzt wird. Der Sensor ist dabei meist rotationsfest gehalten und von dem Magneten geringfügig beabstandet, sodass die Erfassung der Drehzahl berührungslos erfolgt.

Bei Montage es ist erforderlich, den Magneten verliersicher an der Rotorwelle zu befestigen. Hierfür wird üblicherweise Klebstoff verwendet. Die Dosierung des Klebstoffs ist jedoch vergleichsweise zeitaufwendig, wobei, wenn zu wenig Klebstoff verwendet wird, ein Anhaften des Magneten an der Rotorwelle nicht sichergestellt ist. Sofern zu viel Klebstoff verwendet wird, ist eine Ausdehnung der Rotorwelle vergrößert und Materialkosten übermäßig erhöht. Zudem ist es möglich, dass während der Trocknungsphase des Klebstoffs der Magnet bezüglich der Rotorwelle verrutscht, sodass keine genaue Ausrichtung vorhanden ist.

Der Erfindung liegt die Aufgabe zugrunde, ein besonders geeignetes Verfahren zur Montage eines Magneten eines Hall-Sensors an einer Rotorwelle einer elektrischen Maschine sowie einen besonders geeigneten Stempel als auch eine besonders geeignete Verwendung eines Stempels und eine besonders geeignete elektrische Maschine anzugeben, wobei vorteilhafterweise eine Montage vereinfacht ist, und wobei eine Genauigkeit und eine Einsatzdauer erhöht sind.

Hinsichtlich des Verfahrens wird diese Aufgabe durch die Merkmale des Anspruchs 1, hinsichtlich des Stempels durch die Merkmale des Anspruchs 4, hinsichtlich der Verwendung durch die Merkmale des Anspruchs 8 und hinsichtlich der elektrischen Maschine durch die Merkmale des Anspruchs 9 erfindungsgemäß gelöst. Vorteilhafte Weiterbildungen und Ausgestaltungen sind Gegenstand der jeweiligen Unteransprüche.

Das Verfahren dient der Montage eines Magneten eines Hall-Sensors an einer Rotorwelle einer elektrischen Maschine. Zum Beispiel ist die elektrische Maschine eine Asynchronmaschine oder besonders bevorzugt eine Synchronmaschine. Die elektrische Maschine ist zweckmäßigerweise bürstenlos ausgestaltet. Die elektrische Maschine ist beispielsweise ein Generator oder besonders bevorzugt ein Elektromotor. Hierbei wird bei Betrieb mittels des Elektromotors ein Bauteil angetrieben werden. Zum Beispiel ist die elektrische Maschine ein Bestandteil einer Industrieanlage und das angetriebene Bauteil ist insbesondere ein Aktor, mittels dessen eine Bearbeitung und/oder Erstellung eines Werkstücks erfolgt. Alternativ hierzu ist die elektrische Maschine ein Bestandteil eines Kraftfahrzeugs, wobei mittels der elektrische Maschine zum Beispiel ein Nebenaggregat angetrieben ist. Besonders bevorzugt ist die elektrische Maschine ein Bestandteil eines Hauptantriebs und hierfür geeignet, insbesondere vorgesehen und eingerichtet. Somit ist das angetriebene Bauteil ein Rad oder ein mit dem Rad wirkverbundenes Getriebe.

Das Kraftfahrzeug ist zum Beispiel ein Nutzkraftwagen, wie ein Lastkraftwagen (Lkw) oder Bus. Alternativ hierzu ist das Kraftfahrzeug ein landwirtschaftliches Gerät, wie eine Zugmaschine, ein Mähdrescher oder ein mittels einer Zugmaschine gezogenes Werkzeug/Aktor, wie einer Pflanzmaschine. In einer weiteren Alternative ist das Kraftfahrzeug ein Baufahrzeug oder zum Beispiel ein Personenkraftwagen (Pkw). Alternativ hierzu ist das Kraftfahrzeug ein Motorrad oder ein sogenanntes E-Bikes.

Die Rotorwelle ist vorzugsweise aus einem Stahl erstellt, beispielsweise Edelstahl, sodass eine vergleichsweise robuste elektrische Maschine bereitgestellt ist. Insbesondere ist die Rotorwelle drehbar um eine Rotorachse gelagert, die auch als Rotationsachse bezeichnet wird, und die vorzugsweise konzentrisch zur Rotorwelle angeordnet ist. Zweckmäßigerweise weist die elektrische Maschine ein oder mehrere Lager auf, mittels derer eine Lagerung der Rotorwelle erfolgt. Die Lager sind vorzugsweise an jeweils einem Lagerschilds angebunden, mittels derer ein Gehäuse verschlossen ist, innerhalb dessen zweckmäßigerweise der Rotor der elektrischen Maschine angeordnet ist. Der Rotor ist vorzugsweise drehfest an der Rotorwelle befestigt. Insbesondere umfasst der Rotor eine Anzahl an Permanentmagneten. Geeigneterweise weist die elektrische Maschine einen Stator auf, mittels dessen der Rotor zum Beispiel umfangsseitig umgeben ist. Der Stator umfasst vorzugsweise eine Anzahl an Elektromagneten, die zweckmäßigerweise zu mehreren Phasen miteinander verschaltet sind. Hierbei ist geeigneterweise jeder der Phase die gleiche Anzahl an elektrischen Spulen zugeordnet. Zweckmäßigerweise ist die Anzahl der Phasen hierbei gleich drei. Die (elektrischen) Phasen sind zum Beispiel zu einer Stern- oder Dreiecksschaltung miteinander verschaltet. Geeigneterweise erfolgt bei Betrieb der elektrischen Maschine eine Bestromung der Phasern mittels eines Umrichters, der insbesondere nach Art eines Brückenumrichters, vorzugsweise als B6-Umrichter, ausgestaltet ist.

Der Hall-Sensor umfasst zweckmäßigerweise einen Sensor, der zum Beispiel als Chip ausgestaltet ist, und der insbesondere an einer Leiterplatte befestigt ist. Im Montagezustand ist der Sensor vorzugsweise drehfest gehaltenen, zum Beispiel an einem der etwaigen Lagerschilde. Der Hall-Sensor umfasst ferner den Magneten, der im Montagezustand an der Rotorwelle befestigt ist, insbesondere drehfest. Der Magnet ist vorzugsweise zylinderförmig ausgestaltet und ist geeigneterweise senkrecht zur Rotorachse und/oder diametral durch dessen Mittelpunkt magnetisiert. Vorzugsweise reicht im Montagezustand die Rotorachse durch den Magneten hindurch, und der Magnet ist, mit Ausnahme dessen Magnetisierung, drehsymmetrisch bezüglich der Rotorachse. Zum Beispiel besteht der Magnet aus einem Ferrit, Eisen oder seltenen Erdmaterial.

Zur Befestigung des Magneten, der vorzugsweise ein Permanentmagnet ist, an der Rotorwelle wird ein Adapter verwendet, der zweckmäßigerweise aus einem Metall erstellt ist, sodass eine Robustheit erhöht ist. Geeigneterweise ist eine Härte des Materials des Adapters geringer als eine Härte des Materials der Rotorwelle. Der Adapter ist geeigneterweise aus einem dia- oder paramagnetischen Material erstellt. Somit werden aufgrund des Adapters die mittels des Magneten erstellten Magnetfeldlinien lediglich gering abgeändert. Vorzugsweise ist der Adapter aus einem Aluminium, also beispielsweise reinem Aluminium oder einer Aluminiumlegierung, gefertigt. Der Adapter weist eine Aufnahme auf, die zum Beispiel becher- oder topfförmig ausgestaltet ist. Mit anderen Worten ist die Aufnahme nach Art einer drehsymmetrischen Vertiefung ausgestaltet. Vorzugsweise ist die Aufnahme im Montagezustand drehsymmetrisch bezüglich der Rotorachse. Geeigneterweise sind die Abmessungen der Aufnahme derart ausgestaltet, dass der Magnet kraftlos in die Aufnahme eingesetzt werden kann.

Gemäß dem Verfahren wird der Magnet in der Aufnahme des Adapters eingesetzt, wobei die Richtung des Einsetzens die Axialrichtung ist. Hierbei ist die Axialrichtung gleich bezüglich des Adapters und/oder des Magneten bestimmt, und im Montagezustand ist die Axialrichtung des Magneten/Adapters parallel zur Rotationsachse der Rotorwelle. Vorzugsweise ist hierbei eine Achse des zylinderförmigen Magneten parallel zur Axialrichtung. Aufgrund des Einsetzens ist der Magnet in einer Radialrichtung, die senkrecht zur Axialrichtung ist, von dem Adapter zumindest teilweise umfangsseitig umgeben. Die Radialrichtung ist hierbei insbesondere bezüglich des Magneten und/oder des Adapters definiert. Die Radialrichtung ist vorzugsweise im Montagezustand an der Rotorwelle senkrecht zur Rotationsachse ausgerichtet und schneidet diese. Zusammenfassend wird somit der Magnet in der Aufnahme des Adapters derart in der Axialrichtung eingesetzt, dass der Magnet in der Radialrichtung von dem Adapter zumindest teilweise umfangsseitig umgeben wird.

Zweckmäßigerweise ist aufgrund des Einsetzens und/oder der Abmessungen des Magneten/der Aufnahme der Magnet umfangsseitig vollständig von der Aufnahme umgeben, wobei der Magnet zweckmäßigerweise zylinderförmig ausgestaltet ist. Geeigneterweise ist dabei eine Stirnfläche des Magneten bündig mit einer Begrenzung der Aufnahme des Adapters und/oder senkrecht zur Axialrichtung. Das Einsetzen in Axialrichtung erfolgt zweckmäßigerweise kraftlos, und zwischen der Aufnahme und dem Magneten ist eine Spielpassung erstellt. Insbesondere ist eine Größe der Aufnahme bezüglich des Magneten um zwischen 10/100 mm und 2/100 mm, vorzugsweise gleich 5/100 mm, größer als die Außenabmessungen des Magneten.

Nach Abschluss dieses Arbeitsschritts liegt somit der Magnet innerhalb der Aufnahme ein, sodass eine Position des Magneten mittels des Adapters vorgegeben ist. Dabei ist der Magnet noch nicht an dem Adapter befestigt, und es ist zum Beispiel noch möglich, den Magneten von dem Adapter zu entfernen. Aufgrund des, insbesondere kraftlosen, Einsetzens ist jedoch eine Beschädigung des Magneten und/oder des Adapters vermieden. Insbesondere ist die Aufnahme und/oder der Magneten derart orientiert, dass diese, wenn der Adapter und der Magnet an der Rotorwelle montiert sind, diese drehsymmetrisch bezüglich der Rotationsachse sind.

In einem nachfolgenden Arbeitsschritt wird der Adapter in Radialrichtung nach innen derart plastisch verformt, dass der Magnet in der Aufnahme gehalten wird. Zum plastischen Verformen wird insbesondere auf den Adapter eine Kraft in Radialrichtung nach innen aufgebracht, insbesondere auf denjenigen Teil des Adapters, mittels dessen der Magnet zumindest teilweise umgeben ist. Vorzugsweise erfolgt hierbei ein Kaltverstemmen. Mit anderen Worten werden bevorzugt der Magnet und der Adapter miteinander kaltverstemmt. Vorzugsweise ist hierbei der Adapter aus einem Aluminium erstellt, weswegen die zur plastischen Verformung erforderlichen Kräfte vergleichsweise gering sind. Beispielsweise erfolgt aufgrund der plastischen Verformung ein Kraftschluss zwischen dem Adapter und dem Magneten. Vorzugsweise wird zum Verformen auf den Adapter eine Kraft zwischen 1 kN bis 10 kN ausgeübt. Aufgrund der Verwendung des Adapters ist es möglich, diesen aus einen vergleichsweise weichen Material zu fertigen, sodass zur plastischen Verformung vergleichsweise wenig Kraft aufzubringen ist. Dabei kann die Rotorwelle aus einem vergleichsweise harten Material gefertigt sein, weswegen dennoch eine Robustheit der elektrischen Maschine erhöht ist.

Aufgrund des Verfahrens ist der Magnet unlösbar mit dem Adapter verbunden, weswegen auch bei einer vergleichsweise hohen Belastung der elektrischen Maschine ein Ablösen des Magneten von dem Adapter und somit auch von der Rotorwelle vermieden ist. Hierbei ist ein aufgrund des kraftlosen Einsetzens des Magneten in die Aufnahme eine Belastung auf den Magneten vergleichsweise gering, sodass eine Beschädigung vermieden ist. Mit anderen Worten erfolgt, da zum Einsetzen des Magneten in die Aufnahme im Wesentlichen keine Kraft erforderlich ist oder zumindest zwischen dem Adapter und dem Magneten keine Reibung auftritt, oder zumindest das Einsetzen des Magneten durch den Adapter nicht behindert wird, keine Beschädigung des Magneten, der zum Beispiel aus einem vergleichsweise brüchigen/spröden Material gefertigt ist. Aufgrund des Verformens des Adapters erfolgt keine punktuelle Belastung des Magneten, sodass auch hier eine Beschädigung des Magneten vermieden ist. Mit anderen Worten ist ein Brechen des Magneten aufgrund der Vorgehensweise ausgeschlossen, was eine Montage vereinfacht. Somit ist ein Ausschuss verringert. Auch ist aufgrund der Aufnahme die Position des Magneten vergleichsweise genau gegeben, sodass bei Montage ein Versatz des Magneten nicht erfolgt, weswegen eine Genauigkeit bei der Positionserfassung erhöht ist. Auch sind keine zusätzlichen Materialien erforderlich, weswegen Herstellungskosten reduziert sind. Da zudem der Magnet lediglich mittels Zerstörung von dem Adapter abgelöst werden kann, ist eine Robustheit erhöht, und ein ungewünschtes Ablösen des Magneten von dem Adapter vermieden. Somit ist eine Lebensdauer erhöht.

Insbesondere ist der Adapter einstückig und zum Beispiel urgeformt. Der Adapter ist zweckmäßigerweise im Wesentlichen rotationssymmetrisch ausgestaltet, insbesondere bezüglich einer Achse, die parallel zur Axialrichtung ist, und die im Montagezustand mit der Rotationsachse/Rotorachse der Rotorwelle zusammenfällt. Abweichend zur vollständigen Rotationssymmetrie ist zum Beispiel eine Entlüftungsbohrung vorhanden, mittels derer ein Ausbilden eines Überdrucks aufgrund des Einsetzens des Magneten vermieden ist. Der Adapter ist zweckmäßigerweise pilz- oder nietförmig ausgestaltet, weswegen eine Montage vereinfacht ist. Mit anderen Worten ist der Adapter im Wesentlichen nagelförmig, wobei in den Kopf insbesondere die Aufnahme eingebracht ist. Die Aufnahme ist zweckmäßigerweise rotationssymmetrisch bezüglich der Achse, die im Montagezustand mit der Rotationsachse der Rotorwelle zusammenfällt.

Insbesondere ist eine Außenwand der Aufnahme glatt ausgestaltet, sodass eine Herstellung des Adapters erleichtert ist. Beispielsweise weist der Magnet an dessen Umfang eine Struktur auf, in die der Adapter aufgrund der plastischen Verformung zumindest teilweise eingreift. Die Struktur ist beispielsweise nach Art einer Rille oder Fase ausgestaltet. Alternativ hierzu ist der Magnet außenseitig glatt, weswegen eine Herstellung erleichtert ist. Zweckmäßigerweise wird bei der plastischen Verformung der Adapter derart verformt, dass der Magnet mittels des Adapters umgegriffen wird, insbesondere in Axialrichtung. Mit anderen Worten wird die Öffnung der Aufnahme, durch die der Magnet in diese eingesetzt wurde, zumindest teilweise verkleinert, sodass der Magnet sicher in der Aufnahme gehalten ist. Somit ist einerseits ein Ablösen des Magneten von dem Adapter vermieden. Andererseits ist auf diese Weise keine spezielle Anpassung/Bearbeitung des Magneten und des Adapters erforderlich, weswegen Herstellungskosten und eine Herstellungszeit reduziert sind.

Beispielsweise wird zum plastischen Verformen des Adapters dieser mittels zweier Pressbacken umgegriffen, die aufeinander zu bewegt werden. Besonders bevorzugt jedoch wird auf den Adapter umfangsseitig oder zumindest gleichmäßig umlaufend eine in der Radialrichtung nach innen gerichtete Kraft ausgeübt, sodass das Ausbilden einer Unwucht aufgrund einer ungleichmäßigen Form des Adapters vermieden ist. Zweckmäßigerweise wird zum Verformen ein Stempel verwendet, der eine Stempelöffnung aufweist. Diese ist insbesondere in Axialrichtung gerichtet, und die Stempelöffnung weist eine bezüglich üblich der Radialrichtung und somit auch insbesondere bezüglich der Axialrichtung geneigte Flanke auf. Diese ist insbesondere in Richtung der Öffnung der Stempelöffnung, also des Eintritts der Stempelöffnung, gerichtet.

Gemäß dem Verfahren wird der Stempel in Axialrichtung derart bewegt, dass der Adapter mittels der Flanke verformt wird, also insbesondere der Adapter in Radialrichtung nach innen plastisch verformt wird. Hierfür wird mittels der Flanke auf zumindest einen Teil des Adapters die zur plastischen Verformung erforderliche Kraft aufgebracht. Vorzugsweise ist hierbei der Stempel bezüglich des Adapters in der Axialrichtung bewegt, sodass der der Adapter beispielsweise verstärkt in die Stempelöffnung eintaucht und zumindest teilweise entlang der Flanke bewegt wird. Aufgrund der schräggestellten, also geneigten, Flanke fließt somit ein Teil des Materials des Adapters in Radialrichtung nach innen und auf den Magneten zu, sodass beispielsweise der Kraftschluss realisiert ist.

Die Stempelöffnung weist insbesondere einen Boden auf, der senkrecht zur Axialrichtung angeordnet ist, mittels dessen, zum Beispiel ein Eintauchen des Magneten und/oder des Adapters in Axialrichtung begrenzt wird. Hierbei ist insbesondere der Magnet bezüglich des Adapters in Richtung des Bodens gerichtet. Beispielsweise ist mittels der der Flanke eine Begrenzung der Stempelöffnung realisiert, sodass die Stempelöffnung konisch ausgestaltet ist. Auf diese Weise ist eine Fertigung des Stempels vereinfacht. Besonders bevorzugt jedoch ist die Flanke von einer randseitigen Begrenzung der Stempelöffnung in der Radialrichtung nach innen weg versetzt und zum Beispiel mittels einer Nase bereitgestellt, die an dem etwaigen Boden angebunden oder bevorzugt angeformt ist. Mittels der Nase wird somit eine Rille oder dergleichen in eine Stirnfläche des Adapters eingebracht, sodass das Material in der Radialrichtung nach innen verdrängt wird und somit die Befestigung des Magneten an den Adapter erfolgt. Hierbei werden die Außenabmessungen des Adapters nicht verändert, weswegen eine Unwucht oder dergleichen vermieden wird.

Zum Beispiel wird zunächst der Magnet an dem Adapter befestigt und anschließend der Adapter an der Rotorwelle. Somit ist es möglich, den an dem Adapter befestigten Magneten bereits vorzufertigen. Besonders bevorzugt jedoch wird zur Montage der Adapter zunächst in einer Montageöffnung der Rotorwelle positioniert. Die Montageöffnung ist insbesondere in eine Stirnseite der Rotorwelle eingebracht und vorzugsweise konzentrisch zu der Rotorachse. Mit anderen Worten erstreckt sich die Montageöffnung entlang der Rotorachse. Geeigneterweise ist die Montageöffnung nach Art eines Sacklochs ausgestaltet. Somit ist eine mechanische Integrität der Rotorwelle lediglich vergleichsweise gering geschmälert. Geeigneterweise ist zwischen dem Adapter und der Montageöffnung hierbei ein Kraftschluss realisiert, sodass zwar ein Kraftaufwand zur Montage des Adapters erhöht ist. Jedoch ist ein Ablösen des Adapters von der Rotorwelle vermieden. Zur Montage wird dabei lediglich Kraft auf den Adapter ausgeübt, weswegen eine Beschädigung des Magneten vermieden ist.

Beispielsweise wird anschließend der Magnet in die Aufnahme gesetzt, oder der Magnet befand sich bereits in der Aufnahme, wenn der Adapter in der Montageöffnung der Rotorwelle positioniert wird. Bevorzugt jedoch ist in diesem Fall der Magnet noch nicht an dem Adapter gehalten. Zweckmäßigerweise wird der Adapter mittels des Stempels in der Axialrichtung in die Montageöffnung gepresst. Insbesondere erfolgt dies in einem Arbeitsschritt mit dem plastischen Verformen des Adapters zum Halten des Magneten, weswegen eine Anzahl an benötigten Arbeitsschritten reduziert ist. Zusammenfassend erfolgt die endgültige Befestigung des Adapters und des Magneten an dem Adapter in einem gemeinsamen Arbeitsschritt, weswegen eine Herstellungszeit reduziert ist.

Vorzugsweise ist der Stempel derart ausgestaltet, dass zunächst der Adapter in die Montageöffnung gepresst wird, und wenn dieser eine bestimmte Position erreicht, wird aufgrund der vorhandenen Kraft der Adapter plastisch verformt. Insbesondere weist der Adapter den Stempel hierfür, vorzugsweise die Stempelöffnung, entsprechende Anschläge auf. Geeigneterweise wird hierbei eine Presspassung zwischen dem Adapter und der Rotorwelle realisiert, sodass ein Verdrehen dieser zueinander ausgeschlossen ist. Vorzugsweise wird bei dem Pressen des Adapters in die Rotorwelle der Adapter dabei zusätzlich zumindest geringfügig plastisch verformt, sodass ein Ablösen des Adapters von der Rotorwelle vermieden ist. Insbesondere weist die Montageöffnung an der Innenseite eine Innenverzahnung auf, sodass eine Verdrehsicherung des Adapters bezüglich der Rotorwelle realisiert ist.

Der Stempel dient der Durchführung des Verfahrens zur Montage eines Magneten eines Hall-Sensors an einer Rotorwelle einer elektrischen Maschine und ist hierfür geeignet, insbesondere vorgesehen und eingerichtet. Der Stempel umfasst eine Stempelöffnung mit einer bezüglich einer Axialrichtung geneigten Flanke. Geeigneterweise ist der Querschnitt der Stempelöffnung senkrecht zur Axialrichtung rund. Vorzugsweise ist die Stempelöffnung rotationssymmetrisch bezüglich einer parallel zur Axialrichtung verlaufenden Achse. Die Axialrichtung ist hierbei insbesondere parallel zu einer Rotationsachse der Rotorwelle, wenn der Magnet an der Rotorwelle montiert ist. Mit anderen Worten ist die Axialrichtung, entlang sich derer die Stempelöffnung erstreckt, parallel zu oder gleich einer Axialrichtung des Adapters und des Magneten, und diese wiederum ist vorzugsweise parallel zur Rotorachse der Rotorwelle. Insbesondere ist der Stempel rotationssymmetrisch bezüglich einer parallel zur Axialrichtung verlaufenden Achse, bezüglich dieser auch der in die Stempelöffnung eingefügte Adapter rotationssymmetrisch ausgestaltet ist. Geeigneterweise ist der Stempel aus einem Stahl, vorzugsweise gehärtetem Stahl, erstellt. Auf diese Weise ist eine Verformung des Adapters erleichtert, insbesondere sofern dieser aus einem Aluminium erstellt ist. Dabei ist ein Verschleiß des Stempels in diesem Fall verringert, und der Stempel kann zur vielfachen Durchführung des Verfahrens verwendet werden.

Beispielsweise ist die Stempelöffnung im Wesentlichen konisch ausgestaltet, zweckmäßigerweise konisch verjüngend, sodass mittels eines Randes der Stempelöffnung die Flanke bereitgestellt ist. Besonders bevorzugt jedoch weist die Stempelöffnung einen bezüglich der Axialrichtung senkrechten Boden auf, der eine vorspringende Nase umfasst. Hierbei ist die Nase von dem Rand des Bodens weg versetzt, und die Nase ist zumindest teilweise in Axialrichtung vorspringend ausgestaltet, sodass diese zumindest teilweise in die Stempelöffnung hineinragt. Insbesondere ist der Querschnitt der Nase v-förmig. Somit entsteht bei Anpressen einer senkrecht zur Axialrichtung verlaufenden Stirnfläche des Adapters in die Nase in der Stirnfläche eine v-förmige Kerbe. Auf diese Weise ist das Verformen des Adapters einerseits vereinfacht, da der Kraftaufwand hierfür zunächst gering ist. Auch erfolgt aufgrund der Form keine Überlastung, sodass ein Brechen oder eine sonstige Beschädigung des Adapters vermieden ist.

Beispielsweise ist lediglich eine derartige Nase vorhanden, oder der Stempel weist mehrere Nasen auf, die jedoch zueinander getrennt sind. Auf diese Weise erfolgt lediglich eine abschnittsweise Verformung des Adapters, weswegen die zum Verformen aufzubringende Kraft reduziert ist. Besonders bevorzugt jedoch ist die Nase bezüglich der Radialrichtung umlaufen ausgestaltet. Insbesondere ist die mittels der Nase somit ein Ring gebildet, der vorzugsweise konzentrisch zu einer Mittelachse der Stempelöffnung angeordnet ist. Auf diese Weise wird bei Verformung des Adapters keine Unwucht in den Adapter eingebracht, sondern dieser wird ebenfalls umlaufend verformt.

Vorzugsweise ist die Nase derart angeordnet, dass diese von dem Magneten beabstandet ist, sodass eine Beschädigung des Magneten aufgrund der Nase vermieden ist. Geeigneterweise ist hierbei jedoch ein Abstand der Nase zu dem Magneten geringer als der Abstand der Nase zu dem in Radialrichtung äußeren Ende des Adapters. Auf diese Weise ist eine benötigte Kraft zum Verformen des dem Magneten zugewandten Teil des Adapters, damit der Magnet in der Aufnahme gehalten wird, verringert.

Beispielsweise ist hierbei der Boden durchgehend ausgestaltet und zum Beispiel eine ebene Fläche. Besonders bevorzugt jedoch ist der Boden zumindest innenseitig teilweise ausgespart, und in den Boden ist somit eine Vertiefung eingebracht. Mittels der Vertiefung ist dabei insbesondere der Magnet und zweckmäßigerweise ein Teil des Adapters überdeckt, sodass dieser Teil und der Magnet nicht direkt an dem Boden anliegen. Aufgrund der Vertiefung ist es möglich, dass bei Verformung des Adapters dieser zumindest teilweise in die Vertiefung hinein verformt wird und somit das Material des Adapters dorthin ausweicht. Infolgedessen lagert sich das Material an der Stirnseite des Magneten an, sodass der Magnet unlösbar mit dem Adapter verbunden ist. Insbesondere schließt sich die etwaige Nasen in Radialrichtung direkt an die Vertiefung umfangsseitig an.

Beispielsweise ist lediglich die Vertiefung vorhanden, sodass mittels des Stempels eine Berührung des Magneten unterbleibt. Besonders bevorzugt jedoch umfasst der Stempel eine Vorrichtung zur Begrenzung der auf den Magneten aufzubringenden Kraft. Bei Durchführung des Verfahrens liegt die Vorrichtung zumindest zeitweise an dem Magneten an, sodass die Position des Magneten bezüglich des Adapters mittels der Vorrichtung stabilisiert wird, ohne dass eine Überbelastung des Magneten erfolgt. Die Vorrichtung ist zweckmäßigerweise in den Boden, vorzugsweise die Vertiefung, integriert und somit dort stabilisiert. Auf diese Weise ist das Durchführen des Verfahrens erleichtert. Aufgrund der Vorrichtung ist somit sichergestellt, dass trotz der auf den Adapter aufgebrachten Kraft, die zur plastischen Verformung führt, eine Beschädigung des Magneten ausgeschlossen ist.

Insbesondere umfasst die Vorrichtung eine Kugel, die federbelastet ist. Die Kugel ist zweckmäßigerweise zwischen zwei Anschlägen in Axialrichtung verschiebbar gelagert und steht im unverwendeten Zustand über den Boden teilweises über und ragt somit in die Stempelöffnung hinein. Folglich gelangt bei Einführen des Adapters des Magneten zunächst die Vorrichtung in Kontakt mit dem Magneten, sodass ein Versatz des Magneten bezüglich der Aufnahme vermieden ist. Sobald die Flanke des Stempels an dem Adapter anliegt, erfolgt die Verformung, und die Kugel weicht in Axialrichtung gegen die Belastung der Feder zurück, sodass die zur Verformung des Adapters verwendete Kraft nicht direkt und vollständig auf den Magneten wirkt.

Ein Stempel, der eine Stempelöffnung mit einer bezüglich einer Axialrichtung geneigten Flanke aufweist, wird zur Durchführung eines Verfahrens zur Montage eines Magneten eines Hall-Sensors an einer Rotorwelle einer elektrischen Maschine mittels eines Adapters verwendet. Bei dem Verfahren wird der Magnet in einer Aufnahme des Adapters derart in der Axialrichtung eingesetzt, dass der Magnet in einer Radialrichtung von dem Adapter zumindest teilweise umfangsseitig umgeben wird. Der Adapter wird in einer Radialrichtung nach innen derart plastisch verformt, dass der Magnet in der Aufnahme gehalten wird. Hierfür wird der Adapter in der Stempelöffnung des Stempels positioniert, und der Stempel wird in Axialrichtung derart bewegt, dass der Adapter mittels der Flanke verformt wird.

Die elektrische Maschine ist beispielsweise ein Generator oder ein Elektromotor und weist eine Rotorwelle auf. An der Rotorwelle ist insbesondere ein Rotor drehfest befestigt. Zweckmäßigerweise ist die Rotorwelle mittels eines oder mehrerer Lager drehbar gelagert, vorzugsweise um eine Rotorachse. An der Rotorwelle ist ein Magnet eines Hall-Sensors mittels eines Adapters befestigt. Hierbei wurde zur Herstellung der Magnet in einer Aufnahme des Adapters derart in einer Axialrichtung eingesetzt, dass der Magnet in einer Radialrichtung von dem Adapter zumindest teilweise umfangsseitig umgeben wird. Nachfolgend wurde der Adapter in einer Radialrichtung nach innen derart plastisch verformt, dass der Magnet in der Aufnahme gehalten wird.

Vorzugsweise ist der Adapter in eine Montageöffnung der Rotorwelle gepresst, die zweckmäßigerweise in eine Stirnseite der Rotorwelle eingebracht ist, die senkrecht zur Rotorachse der Rotorwelle ist. Die Montageöffnung verläuft dabei zweckmäßigerweise zumindest teilweise entlang der Rotorachse, die auch als Rotationsachse bezeichnet ist.

Bei der elektrischen Maschine ist somit zumindest der Adapter derart plastisch verformt, dass der Magnet innerhalb der Aufnahme gehalten ist. Aufgrund der plastischen Verformung ist der Adapter insbesondere derart verformt, dass der Magnet mittels des Adapters zweckmäßigerweise teilweise umschlossen ist, sodass eine Öffnung der Aufnahme kleiner als die Ausdehnung des Magneten ist.

Vorzugsweise umfasst die elektrische Maschine einen Sensor des Hall-Sensors, welcher zum Beispiel in einem Chip integriert ist, und welcher basierend auf dem Hall-Effekt arbeitet. Mittels des Sensors ist es hierbei möglich, dass bei Betrieb der elektrischen Maschine mittels des Magneten erstellte rotierende Magnetfeld zu erfassen. Hierfür ist der Sensor geeignet, insbesondere vorgesehen und eingerichtet. Der Sensor weist zum Beispiel mehrere Anschlüsse auf, wobei an einigen diesen eine elektrische Spannung anlegbar ist.

Die im Zusammenhang mit dem Verfahren erläuterten Weiterbildungen und Vorteile sind sinngemäß auch auf den Stempel / die Verwendung / die elektrische Maschine sowie untereinander zu übertragen und umgekehrt.

Nachfolgend wird ein Ausführungsbeispiel der Erfindung anhand einer Zeichnung näher erläutert. Darin zeigen:
- Fig. 1: schematisch ein Kraftfahrzeug mit einer elektrischen Maschine,
- Fig. 2: ein Verfahren zur Montage eines Magneten eines Hall-Sensors an einer Rotorwelle der elektrischen Maschine,
- Fig. 3: in einer perspektivischen Schnittdarstellung die Rotorwelle mit einem daran befestigten Rotor,
- Fig. 4: perspektivisch in einer Explosionsdarstellung die Rotorwelle, einen Adapter und den Magneten,
- Fig. 5: in einer Schnittdarstellung die Rotorwelle, den Adapter und den Magneten während der Montage, bei der ein Stempel verwendet wird,
- Fig. 6: perspektivisch den Stempel,
- Fig. 7, 8: in einer Schnittdarstellung bzw. in einer perspektivischen Schnittdarstellung die Rotorwelle, den Adapter und den Magneten während der Montage zu unterschiedlichen Zeitpunkten, und
- Fig. 9: in einer Schnittdarstellung vergrößert die Rotorwelle, den Adapter, den Magneten und den Stempel.

Einander entsprechende Teile sind in allen Figuren mit den gleichen Bezugszeichen versehen.

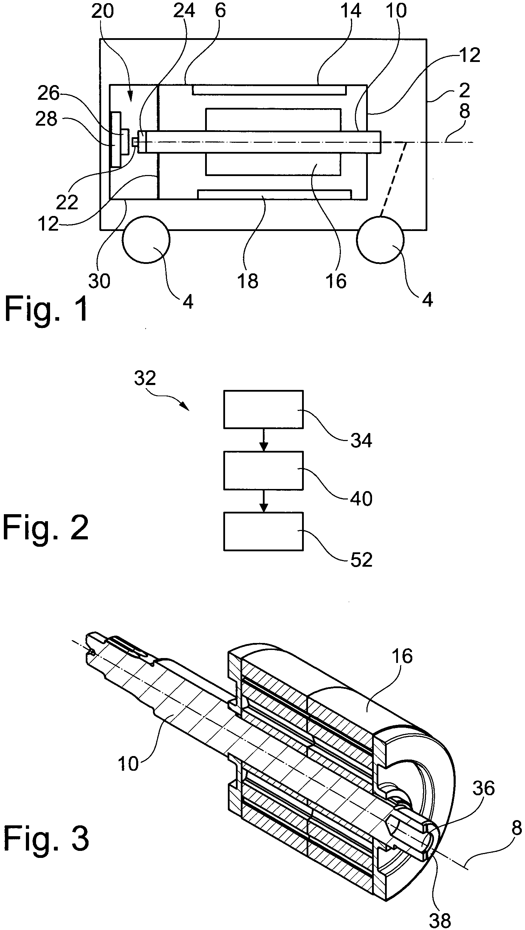

In Figur 1 ist schematisch vereinfacht ein Kraftfahrzeug 2 mit mehreren Rädern 4 dargestellt, mittels derer ein Kontakt zu einer nicht näher gezeigten Fahrbahn erfolgt. Zumindest eines der Räder 4 ist mittels einer als ein Elektromotor ausgestalteten elektrischen Maschine 6 angetrieben und somit mit diesem in Wirkverbindung. Dabei ist mittels der elektrischen Maschine 6 zunächst ein Getriebe oder dergleichen direkt angetrieben, und über das wiederum oder beispielsweise weitere Bauteile das Rad 4.

Die elektrische Maschine 6 weist eine bezüglich einer Rotorachse 8, die auch als Rotationsachse bezeichnet wird, drehbar gelagerte Rotorwelle 10 auf. Hierfür werden zwei nicht näher dargestellte Lagern verwendet, nämlich Kugellager, von denen jeweils eines an zugeordneten Lagerschild 12 angebunden ist. Somit sind insgesamt zwei Lagerschilde 12 vorhanden, mittels derer ein hohlzylindrisch ausgestaltetes Gehäuse 14, das konzentrisch zur Rotorachse 8 angeordnet ist, beidseitig verschlossen ist. Somit verläuft die Rotorwelle 10 durch das Gehäuse 14 hindurch.

Innerhalb des Gehäuses 14 ist ein Rotor 16 angeordnet, der drehfest an der Rotorwelle 10 befestigt ist, und der eine Anzahl an nicht näher dargestellten Permanentmagneten umfasst. Der Rotor 16 ist ebenfalls hohlzylindrisch ausgestaltet und konzentrisch zur Rotorachse 8 angeordnet. Umfangsseitig ist der Rotor 16 mittels eines Stators 18 umgeben, der an einer Innenseite des Gehäuses 14 befestigt ist. Der Stator 18 umfasst mehrere nicht näher dargestellte Elektromagneten, die zu drei elektrischen Phasen zusammengeschaltet sind. Die Bestromung der Elektromagneten und somit auch der Phasen erfolgt mittels eines nicht näher dargestellten Umrichters.

Damit dies fehlerfrei erfolgt, weist die elektrische Maschine 6 einen Hall-Sensor 20 auf, mittels dessen eine Drehzahl und/oder Lage der Rotorwelle 10 und somit auch des Rotors 16 bezüglich des Stators 18 erfasst werden kann. Hierfür umfasst der Hall-Sensor 20 einen Magneten 22, der an einem Adapter 24 befestigt ist. Der Adapter 24 ist aus einem paramagnetischen Material erstellt, nämlich Aluminium. Folglich werden mittels des Adapters 24 die mittels des Magneten 20 erstellten Magnetfelder lediglich gering abgewandelt. Der Adapter 24 wiederum ist an einem Ende der Rotorwelle 10 drehfest befestigt.

Der Hall-Sensor 20 umfasst ferner ein Sensor 26, der nach dem Hall-Prinzip arbeitet. Mittels des Sensors 26 werden bei Betrieb die mittels des Magneten 22, der der diametral durch den Mittelpunkt magnetisiert und konzentrisch der auf Rotorachse 8 angeordnet ist, erfasst. Der Sensor 26 liegt als ein Chip vor und ist an einer Leiterplatte 28 befestigt. Der vollständige Hall-Sensor 20 ist innerhalb eines Elektronikgehäuses 30 angeordnet, das an einem der Lagerschilde 12 befestigt ist, und innerhalb dessen die Rotorwelle 10 einseitig endet.

In Figur 2 ist ein Verfahren 32 zur Montage des Magneten 22, der ein Permanentmagnet ist, an der Rotorwelle 10 mittels des Adapters 24 gezeigt. In einem ersten Arbeitsschritt 34 wird die in Figur 3 in einer perspektivischen Schnittdarstellung entlang der Rotorachse 8 dargestellte Rotorwelle 10, die aus einem Stahl erstellt ist, bereitgestellt, an der umfangsseitig der Rotor 16 befestigt ist. Das im Montagezustand innerhalb des Elektronikgehäuses 30 einliegende Ende der Rotorwelle 10 weist eine Montageöffnung 36 auf, die in eine senkrecht zur Rotorachse 8 verlaufende Stirnseite 38 der Rotorwelle 10 eingebracht ist. Die Montageöffnung 36 ist sacklochartig ausgestaltet und verläuft entlang der Rotorachse 8 sowie ist konzentrisch sowie drehsymmetrisch bezüglich dieser ausgestaltet.

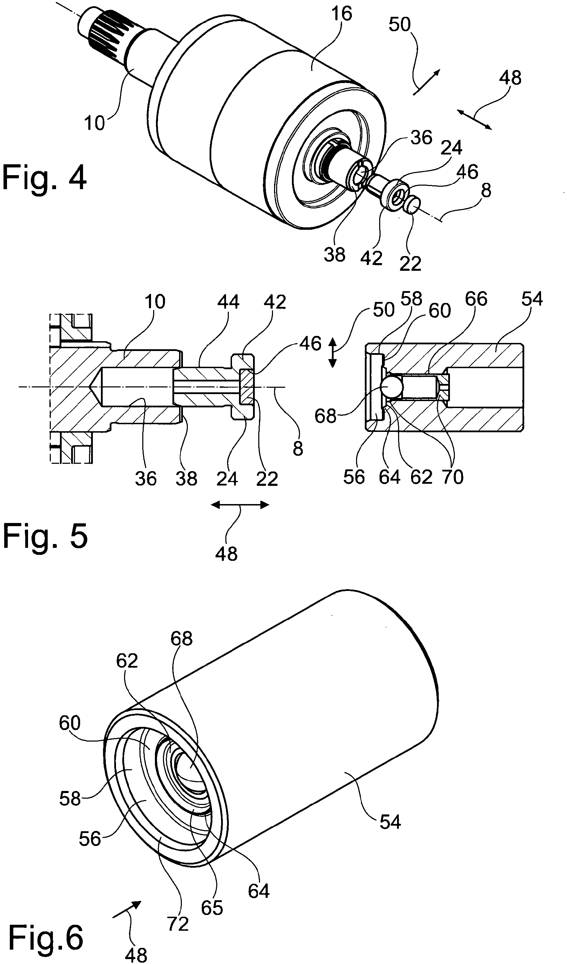

In einem sich anschließenden zweiten Arbeitsschritt 40 wird der Adapter 24, der nagelförmig ausgestaltet ist und einen Kopf 42 und einen daran angeformten Körper 44 mit verringertem Durchmesser aufweist, in die Montageöffnung 36 eingesetzt, wie in Figur 5 dargestellt. Der hohlzylindrisch ausgestaltete und sich entlang der Rotorachse 8 erstreckende Körper 44 ist konzentrisch zur Rotorachse 8 angeordnet und weist als Außendurchmesser den Innendurchmesser der Montageöffnung 36 auf oder ist geringfügig größer.

Der Kopf 42 weist im Vergleich zum Körper 44 einen vergrößerten Außendurchmesser auf, und auf dem dem Körper 44 gegenüberliegenden Ende ist in den Kopf 42 eine topfförmige Aufnahme 46 eingebracht, die somit mittels einer zylindrischen Aussparungen bereitgestellt ist. Über den hohlzylindrisch ausgestalteten Körper 44 ist eine fluidtechnische Anbindung der Aufnahme 46 zum Inneren der Montageöffnung 36 gegeben. Der vollständige Adapter 24 ist rotationssymmetrisch bezüglich der Rotorachse 8 ausgestaltet, und eine Axialrichtung 48 des Adapters 24, entlang derer der Körper 44 erstreckt, ist parallel zur Rotorachse 8.

In die Aufnahme 46 wird der zylindrisch ausgestaltete Magnet 22 eingesetzt, wofür dieser in Axialrichtung 48 bewegt wird. Dabei ist der Außendurchmesser des Magneten 22 bezüglich des Innendurchmessers der Aufnahme 46 um 5/100 mm verringert, sodass zwischen dem in der Axialrichtung 48 in die Aufnahme 46 eingesetzten Magneten 22 und dem Adapter 24 eine Spielpassung erstellt ist. Auch erfolgt das Einsetzen kraftlos. Die Höhe der Aufnahme 46, also die Ausdehnung in Axialrichtung 48, entspricht dabei der Ausdehnung des Magneten 22 in Axialrichtung 48, sodass der Magnet 22 in einer Radialrichtung 50, die senkrecht zur Axialrichtung 48 ist, vollständig von dem Adapter 24 umfangsseitig umgeben wird. Aufgrund der Abmessungen steht der Magnet 22 über den Adapter 24 nicht über, sondern ist bündig mit diesem, wie in Figur 5 dargestellt.

In einem sich anschließenden dritten Arbeitsschritt 52 wird ein Stempel 54 verwendet, der bereits in Figur 5 in der Schnittdarstellung und in Figur 6 perspektivisch gezeigt ist. Der Stempel 54 ist im Wesentlichen zylinderförmig und weist an einer Stirnseite eine Stempelöffnung 56 auf, die zur Durchführung des Verfahrens 32 derart angeordnet ist, dass sich diese konzentrisch zur Rotorachse 8 erstreckt und somit parallel zur Axialrichtung 48 verläuft.

Der Stempel 54 ist aus einem gehärteten Stahl erstellt, und die Stempelöffnung 56 ist im Wesentlichen topfförmig ausgestaltet und weist somit einen umlaufenden Rand 58 auf, der parallel zur Axialrichtung 48 verläuft. Zudem weist die Stempelöffnung 56 einen Boden 60 auf, der senkrecht zur Axialrichtung 48 angeordnet ist.

In den Boden 60 ist eine konzentrisch zur Rotorachse 8 und somit in der Axialrichtung 48 verlaufende Vertiefungen 62 eingebracht, die sich somit in der Mitte des Bodens 60 befindet. Die Vertiefung 62 ist hierbei von dem Boden 60 bezüglich des Rands 58 in Axialrichtung 48 weg versetzt. Zwischen der Vertiefungen 62 und dem Boden 60 ist eine ringförmig ausgestaltete Nase 64 angeordnet. Mit anderen Worten geht der Boden 60 über die Nase 64 in die Vertiefung 62 über. Somit ist der Boden 60 im Wesentlichen ringförmig und erstreckt sich zwischen der Nase 64 und dem Rand 58. Die Nase 64 weist parallel zur Rotorachse 8 einen V-förmigen Querschnitt auf, und ragt in die Stempelöffnung 56 hinein. Somit ist mittels der Nase 64 eine ebenfalls ringförmig umlaufende Flanke 65 bereitgestellt, die bezüglich der Radialrichtung 50 und auch bezüglich der Axialrichtung 48 geneigt ist und auch ein Bestandteil der Stempelöffnung 56 ist.

In dem Mittelteil der Vertiefung 62 ist eine Vorrichtung 66 angeordnet, die ebenfalls konzentrisch zur Rotorachse 8 ausgerichtet ist. Die Vorrichtung 66 weist eine Kugel 68 auf, die zwischen zwei Anschlägen 70 in Axialrichtung 48 beweglich gelagert ist. Hierbei ist zwischen dem der Stempelöffnung 56 abgewandten Anschlag 70 und der Kugel 68 eine nicht näher dargestellte Feder angeordnet, sodass die Kugel 68 federbelastet ist und auf den der Stempelöffnung 56 zugeordneten Anschlag 70 gedrückt wird. Wenn die Kugel 68 an diesem Anschlag 70 anliegt, reicht die Kugel 68 bis in die Stempelöffnung 56 hinein, sodass dieser Teil zumindest teilweises über den Boden 60 und die Vertiefung 68 in Axialrichtung 48 übersteht und in diesen integriert ist.

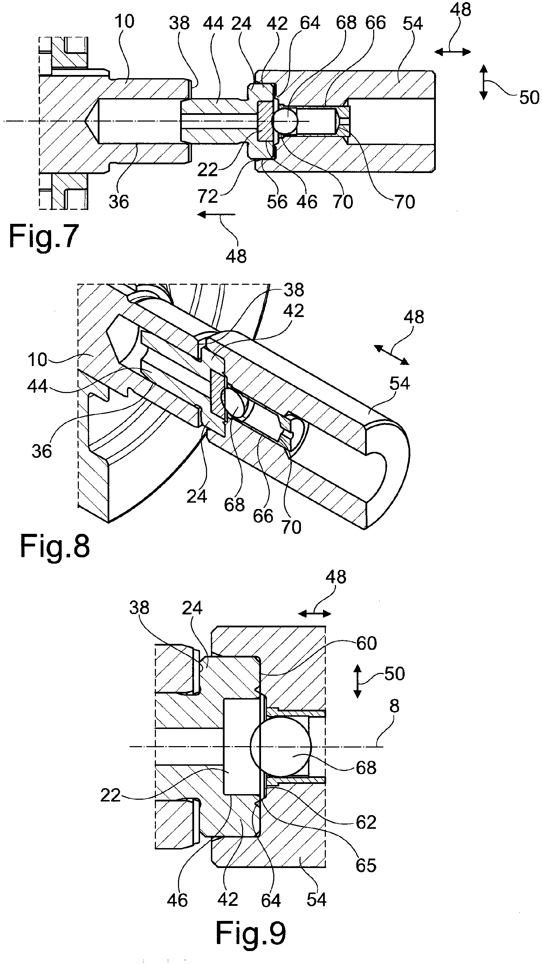

In dem dritten Arbeitsschritt wird, wie in Figur 7 dargestellt, der Adapter 24, nämlich dessen Kopf 42, in der Stempelöffnung 56 positioniert. Hierfür wird der Stempel 54 in der Axialrichtung 48 bewegt, und der Adapter 24 taucht in die Stempelöffnung 56 ein. Der Rand 58 der Stempelöffnung 56 weist dabei an der dem Boden 60 abgewandten Ende eine Fase 72 auf, sodass das Einführen des Adapters 24 erleichtert ist.

Bei einem weiteren Einführen/Bewegen des Stempels 54 in Axialrichtung 48 gelangt zunächst die Kugel 68 in mechanischen Kontakt mit dem Magneten 22, sodass der Magnet 22 innerhalb der Aufnahme 46 stabilisiert wird. Bei einer stärkeren Kraftausübung weicht die Kugel 68 gegen die Federbelastung zurück in Richtung des anderen Anschlags 70. Dann gelangt die Nase 64 in mechanischen Kontakt mit dem Adapter 24, nämlich dessen Stirnfläche. Hierbei ist der Radius der Nase 64 kleiner als der Radius des Magneten 22, sodass ein direkter mechanischer Kontakt des Magneten 22 mit der Nase 64 oder dem Boden 60 unterbleibt. Mit anderen Worten ist der Magnet 22 lediglich mit der Kugel 68 als einziges Bauteil des Stempels 54 in direktem mechanischen Kontakt.

Aufgrund der mittels des Stempels 54 über die Nase 64 auf den Kopf 42 ausgeübten Kraft wird der Körper 44 des Adapters 24 in die Montageöffnung 36 der Rotorwelle 10 gepresst, wie in Figur 8 dargestellt. Aufgrund der Abmessungen des Körpers 44 und der Montageöffnung 36 wird dabei zwischen diesen eine Presspassung erstellt. Aufgrund der Vorrichtung 66 und der zurückweichenden Kugel 68 ist dabei die auf den Magnet 22 aufgebrachte Kraft begrenzt oder zumindest im Vergleich zu der mittels des Stempels 54 auf dem Adapter 42 aufgebrachten Kraft reduziert. Folglich dient die Vorrichtung 66 der Begrenzung der auf den Magneten 22 aufzubringenden Kraft.

Zusammenfassend wird der Adapter 24 in der Montageöffnung 36 der Rotorwelle 10 positioniert, und mittels des Stempels 54 wird der Adapter 24 in der Axialrichtung 48 in die Montageöffnung 36 gepresst. Hierbei erfolgt eine geringfügige elastische Verformung des Körpers 44, sodass der Adapter 24 verliersicher an der Rotorwelle 10 befestigt ist.

Sobald die Kopf 42 an der Stirnseite 38 anliegt, wird mittels der Rotorwelle 10 ein weiteres Bewegen des Adapters 24 in Axialrichtung 48 unterbunden, wie in Figur 8 dargestellt. Jedoch wird auch weiterhin mittels des Stempels 54 Kraft in Axialrichtung 48 aufgebracht, weswegen die Nase 64 in den Kopf 42 des Adapters 24 eintaucht, wie in Figur 9 in einer Schnittdarstellung entlang der Rotorachse 8 dargestellt. Dabei wird mittels der Nase 64 eine umlaufende Kerbe in dem Kopf 42 erstellt.

Mittels der Flanke 65, die die in Radialrichtung 50 innere Begrenzung der Nase 64 bildet, wird ein Teil des Adapters 24 in die Vertiefung 62 hineinverformt, sodass der Magnet 22 auf der der Vertiefung 62 zugewandten Seiten zumindest randseitig umgegriffen wird. Folglich wird der Stempel 54 in der Axialrichtung 48 derart bewegt, dass der Adapter 24 mittels der Flanke 65 in Radialrichtung 50 plastisch nach innen verformt wird. Die Verformung ist hierbei derart, dass der Magnet 22 in der Aufnahme 46 gehalten wird. Das Bewegen des Stempels 54 erfolgt solange, bis der Boden 60 flächig an dem Kopf 42 anliegt, sodass eine vergleichsweise große Gegenkraft bereitgestellt ist. Nachfolgend wird der Stempel 54 von der elektrischen Maschine 6 entfernt, und das Verfahren 32 ist abgeschlossen, wobei der Stempel 54 zur Durchführung des Verfahrens 32 verwendet wurde.

Aufgrund des Verfahrens 32 ist der Adapter 24 plastisch verformt worden und weist die umlaufende ringförmige Kerbe auf, die mittels der Nase 64 erstellt wurde. Aufgrund der plastische Verformung ist der Magnet 22 verliersicher in der Aufnahme 46 gehalten, wobei die Verformung des Adapters 24 mittels Kaltverstemmens erfolgte.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: elektrische Maschine
- 8: Rotorachse
- 10: Rotorwelle
- 12: Lagerschild
- 14: Gehäuse
- 16: Rotor
- 18: Stator
- 20: Hall-Sensor
- 22: Magnet
- 24: Adapter
- 26: Sensor
- 28: Leiterplatte
- 30: Elektronikgehäuse
- 32: Verfahren
- 34: erster Arbeitsschritt
- 36: Montageöffnung
- 38: Stirnseite
- 40: zweiter Arbeitsschritt
- 42: Kopf
- 44: Körper
- 46: Aufnahme
- 48: Axialrichtung
- 50: Radialrichtung
- 52: dritter Arbeitsschritt
- 54: Stempel
- 56: Stempelöffnung
- 58: Rand
- 60: Boden
- 62: Vertiefung
- 64: Nase
- 65: Flanke
- 66: Vorrichtung
- 68: Kugel
- 70: Anschlag
- 72: Fase

## Patentansprüche

1. Verfahren (32) zur Montage eines Magneten (22) eines Hall-Sensors (20) an einer Rotorwelle (10) einer elektrischen Maschine (6) mittels eines Adapters (24), bei welchem
- der Magnet (22) in einer Aufnahme (46) des Adapters (24) derart in einer Axialrichtung (48) eingesetzt wird, dass der Magnet (22) in einer Radialrichtung (50) von dem Adapter (24) zumindest teilweise umfangsseitig umgeben wird, und
- der Adapter (24) in Radialrichtung (50) nach innen derart plastisch verformt wird, dass der Magnet (22) in der Aufnahme (46) gehalten wird.

2. Verfahren (32) nach Anspruch 1,
**dadurch gekennzeichnet,**
**dass** der Adapter (24) in einer eine bezüglich der Radialrichtung (50) geneigte Flanke (65) aufweisenden Stempelöffnung (56) eines Stempels (54) positioniert wird, und dass der Stempel (54) in Axialrichtung (48) derart bewegt wird, dass der Adapter (24) mittels der Flanke (65) verformt wird.

3. Verfahren (32) nach Anspruch 2,
**dadurch gekennzeichnet,**
**dass** der Adapter (24) in einer Montageöffnung (36) der Rotorwelle (10) positioniert wird, wobei der Adapter (24) mittels des Stempels (54) in der Axialrichtung (48) in die Montageöffnung (36) gepresst wird.

4. Stempel (54) zur Durchführung eines Verfahrens (32) nach einem der Ansprüche 2 oder 3, der eine Stempelöffnung (56) mit einer bezüglich einer Axialrichtung (48) geneigten Flanke (65) aufweist.

5. Stempel (54) nach Anspruch 4,
**dadurch gekennzeichnet,**
**dass** die Stempelöffnung (56) einen bezüglich der Axialrichtung (48) senkrechten Boden (60) aufweist, der eine vorspringende Nase (64) umfasst, mittels der die Flanke (65) bereitgestellt ist.

6. Stempel (54) nach Anspruch 5,
**dadurch gekennzeichnet,**
**dass** die Nase (64) bezüglich der Radialrichtung (50) umlaufend ausgestaltet ist.

7. Stempel (54) nach Anspruch 5 oder 6,
**dadurch gekennzeichnet,**
**dass** in den Boden (60) eine Vorrichtung (66) zur Begrenzung der auf den Magneten (22) aufzubringenden Kraft integriert ist.

8. Verwendung eines Stempels (54) nach einem der Ansprüche 4 bis 7 zur Durchführung eines Verfahrens (32) gemäß Anspruch 2 oder 3.

9. Elektrische Maschine (6) mit einer Rotorwelle (10), an der ein Magnet (22) eines Hall-Sensors (20) mittels eines Adapters (24) montiert ist, und der gemäß einem Verfahren (32) nach einem der Ansprüche 1 bis 3 montiert ist.
